# EUROPÄISCHE PATENTSCHRIFT

(11) **EP 0 940 628 B1**
(45) Veröffentlichungstag und Bekanntmachung des Hinweises auf die Patenterteilung: **14.06.2006**
(21) Anmeldenummer: 99103129.5
(22) Anmeldetag: 17.02.1999
(51) Int. Cl.: F21V 17/00

(54) **Innenraumleuchte mit einer Flügelstruktur**
Interior light with a wing structure
Lampe pour espace intérieur avec une structure ailaire

(30) Priorität: 02.03.1998 DE 19808913
(43) Veröffentlichungstag der Anmeldung: 08.09.1999
(73) Patentinhaber: Siteco Beleuchtungstechnik GmbH, 83301 Traunreut (DE)
(72) Erfinder: Müller, Gottfried, 83374 Traunwalchen (DE)
(74) Vertreter: Goddar, Heinz J.

(56) Entgegenhaltungen:
- EP-A- 0 414 201
- EP-A- 0 526 746
- DE-A- 19 533 491
- US-A- 4 791 745

## Beschreibung

Die Erfindung betrifft eine Innenraumleuchte gemäß dem Oberbegriff des Anspruchs 1. Eine derartige Innenraumleuchte ist beispielsweise in der europäischen Patent schrift EP-A1-0 846 915 beschrieben.

EP 0 855 552 A2 offenbart eine Beleuchtungsanordnung für Arbeitsplätze. Gemäß einer Ausführungsform ist eine freistehende, transparente Trennwand vorgesehen, in die Licht von einer Schmalseite eingekoppelt wird. Die Trennwand ist auf einer Seite verspiegelt und gibt über die gegenüberliegende Seite Licht ab. Das Licht wird von einer stabförmigen Lampe und einem Reflektor eingekoppelt. Eine Befestigung für die Trennwand ist nicht offenbart. Die EP 0 855 552 A2 wurde zur Bildung des Oberbegriffs des Anspruchs 1 herangezogen.

Das US-Patent 4 791 745 offenbart eine Schwarzlichtanzeige. Licht einer Schwarzlichtlampe wird in eine Acrylplatte über eine Längsseite eingekoppelt. Die Acrylplatte ist mittels Rastverbindungen an gegenüberliegenden Ecken der Längsseite in einem Gehäuse befestigt.

GB 2 241 056 A offenbart eine plattenförmige Beleuchtungsanordnung für eine Aufzugskabine. An der Decke einer Aufzugskabine liegen ein oder mehrere transparente Platten auf seitlichen Schienen auf. In die Platten wird durch stabförmige Lampen seitlich Licht eingekoppelt, das von der Platte in Richtung der Aufzugskabine nach unten abgegeben wird.

Weitere Arten von transparenten Lichtleitern, in die über eine Schmalseite Licht eingekoppelt wird, sind in dem US-Patent 4 059 916 offenbart.

Die Patentschrift EP-A1-0 846 915 beschreibt eine Innenraumleuchte, bei welcher das Licht von einer stabförmigen Lichtquelle in eine oder mehrere seitlich von dieser Lichtquelle angeordnete Lichtleiterplatten einkoppelt, welche dann das Licht im wesentlichen über eine nach unten gerichtete Lichtaustrittsfläche in den Raum abstrahlen. Zur besseren Lichteinkopplung ist um die Lichtquelle herum ein Reflektor angeordnet, welcher das Licht zu der Schmalseite der Lichtleiterplatte, welche deren Lichteintrittsfläche bildet, reflektiert, wobei vorgesehen sein kann, daß ein Teil des von der Lichtquelle abgegebenen Lichts über die Lichtleiterplatte hinaus nach oben in den Raum reflektiert wird, so daß einerseits eine Beleuchtung der Raumdecke und andererseits eine Lichtabstrahlung über die Lichtaustrittsflächen der Lichtleiterplatten erfolgt. Gemäß einer Ausführungsform dieser Innenraumleuchte sind zwei Lichtleiterplatten symmetrisch zu einer oder zwei zentral angeordneten Lichtquellen angeordnet.

Bei der Befestigung dieser seitlich vorstehenden Lichtleiterplatten ergibt sich das Problem, daß eine Befestigung mit Schrauben und entsprechenden Bohrungen in der Lichtleiterplatte, die grundsätzlich möglich ist, sich durch sichtbare Muster in der transparenten Platte und durch Lichtverluste bemerkbar macht. Eine Konstruktion, bei welcher die Lichtleiterplatten durch einen Rahmen an der Zentralkörperleuchte gehalten werden, wie dies beispielsweise aus dem Bereich der Hinweisschilder bekannt ist, erfordert einen sehr stabilen Rahmen, der, neben dem hohen Materialeinsatz, auch wegen der damit verbundenen Einschränkung der Möglichkeiten für das Design nachteilig ist.

Es ist die Aufgabe der Erfindung, eine Innenraumleuchte nach dem Oberbegriff des Anspruchs 1 zur Verfügung zu stellen, welche eine Konstruktion zur Befestigung einer oder mehrerer Lichtleiterplatten aufweist, bei welcher einerseits eine Beschädigung der Lichtleiterplatte vermieden wird und bei der die Mittel zur Befestigung der Lichtleiterplatte relativ klein gehalten werden können.

Erfindungsgemäß wird diese Aufgabe durch eine Innenraumleuchte mit einer Lichtquelle, einer Lichtleiterplatte, welche mit einer Schmalseite parallel zu der Längsachse der Lichtquelle angeordnet ist, und einem Reflektor, welcher das Licht von der Lichtquelle zumindest teilweise zu der Schmalseite der Lichtleiterplatte reflektiert, so daß es in die Lichtleiterplatte eintritt, gelöst, welche durch ein Trägerelement mit zumindest einem Halteabschnitt, an welchem die Leiterplatte abgestützt ist, sowie durch eine Klemmreinrichtung an dem Halteabschnitt zum Einspannen der Lichtleiterplatte derart, daß die Platte an dem Trägerelement gehalten wird, gekennzeichnet ist, wobei der Halteabschnitt gemäß einer Ausführungsform der Erfindung eine oder mehrere Fassungen für die Lichtquelle aufweisen kann.

Bei der erfindungsgemäßen Innenraumleuchte können außer der vorangehend genannten Lichtquelle und/oder der vorangehend genannten Lichtleiterplatte auch weitere Lichtquellen und Lichtleiterplatten vorhanden sein, welche in entsprechender Weise montiert bzw. angeordnet sind.

Vorzugsweise sind für eine Lichtleiterplatte zwei Halteabschnitte vorgesehen, an welchen die Lichtleiterplatte jeweils an einem Ende eingespannt wird und welche, z.B. bei der Verwendung von handelsüblichen Leuchtstofflampen mit zwei Anschlüssen, jeweils eine Fassung für die Lichtquelle aufweisen können.

Gemäß einer bevorzugten Ausführungsform ist vorgesehen, daß die Lichtleiterplatte oder ggf. die Lichtleiterplatten freitragend von dem Trägerelement absteht.

Hinsichtlich der Klemmeinrichtung kann vorgesehen sein, daß diese ein an zwei Punkten eines Halteabschnitts drehbar gelagertes Hebelteil, welches einen Druckhebel bildet, und eine Einrichtung zum Verspannen des Hebelteils gegenüber dem Trägerelement, vorzugsweise dem Halteabschnitt aufweist, welche gemäß einer besonderen Ausführungsform aus einer Schraube bestehen kann, welche in den Halteabschnitt oder das Hebelteil eingeschraubt ist und die über ihren Kopf auf einen Schraubensitz des jeweils anderen Teils einwirkt. Diese Ausgestaltungsform hat den Vorteil, daß Platten unterschiedlicher Dicke leicht und sicher gehalten werden können.

Gemäß einer bevorzugten Ausführungsform ist vorgesehen, daß das Hebelteil einerseits an dem Halteabschnitt drehbar gelagert ist und andererseits an einem zwischen dem Hebelteil und der Lichtleiterplatte angeordneten Befestigungselement drehbar gelagert ist, das mit seiner Unterseite, die vorzugsweise eben ausgebildet ist, flächig auf der Lichtleiterplatte anliegt und durch Betätigen der Spanneinrichtung über das Hebelteil gegen die Lichtleiterplatte und zusammen mit dieser gegen den Halteabschnitt verspannt werden kann.

Auf diese Weise ist gewährleistet, daß die Klemmeinrichtung immer flächig auf der Lichtleiterplatte aufliegt und dementsprechend punktuelle Belastungen, die leicht zu einer Beschädigung der Lichtleiterplatte führen können, vermieden werden. Zum besseren Schutz der Lichtleiterplatte können zwischen dem Befestigungselement und der Lichtleiterplatte und/oder zwischen der Lichtleiterplatte und dem Halteabschnitt im jeweiligen Kontaktbereich elastische Polster, beispielsweise in Form einer Gummidichtung, zum Druckausgleich vorgesehen sein.

Bei einer erfindungsgemäßen Innenraumleuchte kann weiterhin vorgesehen sein, daß der Reflektor sich im wesentlichen über die gesamte Länge der Lichtquelle parallel zu der Längsrichtung erstreckt, so daß die Lichtquelle sich zwischen der Lichtleiterplatte und dem Reflektor befindet, wobei der Reflektor einen Wandabschnitt aufweist, welcher Licht von der Lichtquelle über eine Kante der der Lichtquelle zugewandten Schmalseite der Lichtleiterplatte hinaus reflektiert. Auf diese Weise wird bewirkt, daß ein Teil des Lichts direkt z.B. zur Decke abgestrahlt wird.

In diesem Zusammenhang kann weiterhin vorgesehen sein, daß der Reflektor einen Wandabschnitt aufweist, welcher auf der der vorangehend erwähnten Kante gegenüberliegenden Seite an die Lichtleiterplatte anschließt.

Hinsichtlich weiterer Einzelheiten betreffend die optimale Ausbildung des Reflektors wird auf die europäische Patentanmeldung 97 104 417.7 verwiesen, insbesondere hinsichtlich der optimalen Abstrahleigenschaften der Einheit aus Lichtquelle und Reflektor.

Erfindungsgemäß kann weiterhin vorgesehen sein, daß die Lichtleiterplatte an einer ihrer Hauptflächen, welche eine Lichtaustrittsfläche bildet, zumindest abschnittsweise mit einer aus Mikroprismen bestehenden Prismenstruktur versehen ist, welche bewirkt, daß die Lichtabstrahlung einen vorgegebenen Ausblendwinkel nicht überschreitet. Hinsichtlich weiterer Merkmale und Einzelheiten der Mikroprismenstruktur wird ebenfalls auf die europäische Patentanmeldung 97 104 417.7 verwiesen.

Gemäß einer bevorzugten Ausführungsform ist die Lichtleiterplatte an zwei Stirnteilen des Trägerelements als Halteabschnitten jeweils über eine Klemmeinrichtung eingespannt.

Gemäß einer besonderen Ausführungsform der Erfindung können zwei Lichtleiterplatten auf beiden Seiten des Trägerelements, vorzugsweise symmetrisch, angeordnet sein und jeweils von dem Trägerelement freitragend abstehen. Auch eine assymmetrische Anordnung, bei der eine oder mehrere Lichtleiterplatten nur auf einer Seite des Trägerteils angeordnet sind, ist denkbar, wobei in diesem Fall bei einer Hängeleuchte ein entsprechendes Gegengewicht vorgesehen wird. Es kann auch vorgesehen sein, entlang der Länge des Trägerelements mehrere Lichtleiterplatten hintereinander vorzusehen, die vorzugsweise an ihren jeweiligen Enden durch entsprechende Halteabschnitte abgestützt und dort mit eigenen Klemmeinrichtung verspannt sind.

Weitere Merkmale und Vorteile der Erfindung ergeben sich aus der nachfolgenden Beschreibung eines nicht einschränkenden Ausführungsbeispiels der Erfindung mit Bezug auf die beigefügten Zeichnungen.

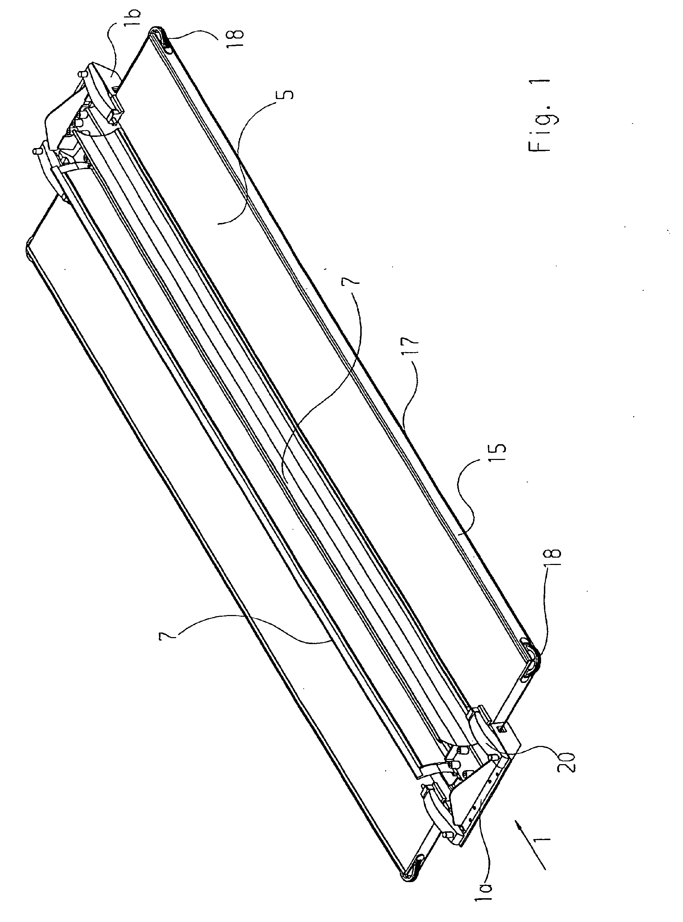

- Fig. 1: zeigt eine perspektivische Darstellung eines Ausführungsbeispiels einer erfindungsgemäßen Leuchte,
- Fig. 2: zeigt einen Querschnitt einer erfindungsgemäßen Leuchte gemäß Fig. 1,
- Fig. 3: zeigt einen teilweisen Längsschnitt durch ein Stirnende des Trägerelements der Leuchte gemäß Fig. 1.

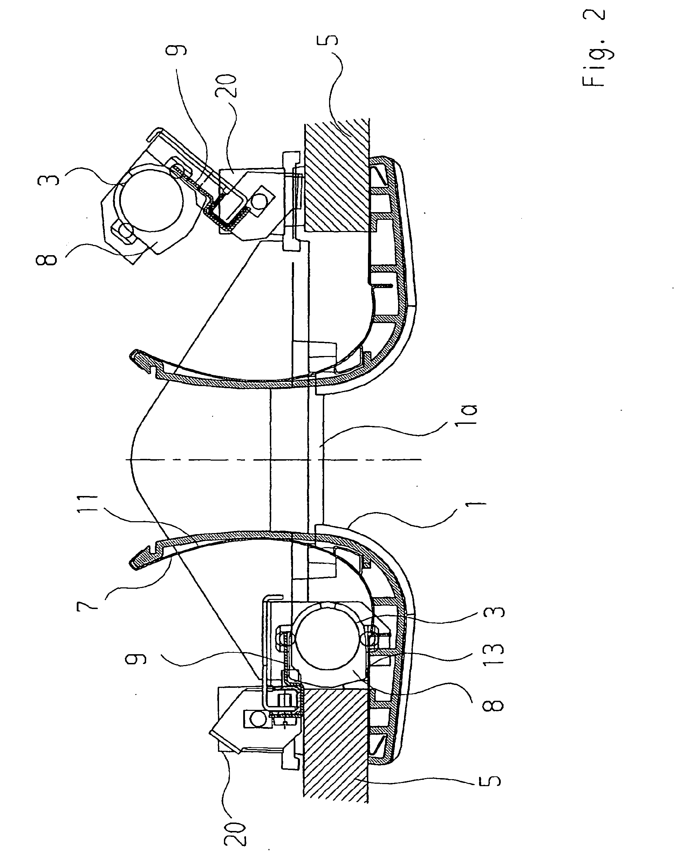

Das in den Figuren dargestellte Ausführungsbeispiel der erfindungsgemäßen Leuchte weist ein zentrales Trägerteil 1 mit Stirnabschnitten 1a und 1b auf. Auf beiden Seiten des Trägerteils 1 sind zwei optische Anordnungen, bestehend aus einer stabförmigen Leuchtstofflampe 3, einer Lichtleiterplatte 5 und einem Reflektor 7, die sich jeweils von dem einen Stirnteil 1a bis zu dem anderen Stirnteil 1b erstrekken, symmetrisch parallel zur Längsrichtung des Trägerteils angeordnet. Die Leuchtstofflampe 3 ist an den beiden Stirnteilen 1a und 1b jeweils in einer schwenkbar gelagerten Fassung 8 gehalten, die, wie auf der rechten Seite der Fig. 2 ersichtlich, zusammen mit einem Deckel 9 aus der in Fig. 2 links dargestellten Betriebsstellung heraus verschwenkt werden kann, um den Lampenwechsel zu erleichtern.

Wie aus Fig. 2 ersichtlich ist, weist der Reflektor 7 einen Wandabschnitt 11 auf, welcher das Licht von der Leuchtstofflampe 3 teilweise zu der Schmalseite der Lichtleiterplatte 5 und zu einem weiteren Teil über den Deckel 9 hinaus nach oben reflektiert. Der Reflektor 7 weist weiterhin einen zweiten Wandabschnitt 13 auf, welcher die Leuchtstofflampe 3 von unten umgibt und, bezogen auf die Darstellung der Fig. 2, auf der Unterseite der Lichtleiterplatte 5 an dieser anliegt. Der Deckel 9 ist an seiner Unterseite ebenfalls reflektierend ausgebildet und weist weiterhin Löcher auf, welche einen teilweisen Lichtaustritt nach oben in der Fig. 2 links dargestellten Betriebsstellung der Leuchtstofflampe 3 gestatten.

An der Außenseite der Lichtleiterplatten 5 sind Reflektorelemente 15 zum Rückreflektieren von Licht in die Lichtleiterplatten 5 an den äußeren Schmalseiten vorgesehen. Diese werden durch ein Seil 17 an den Lichtleiterplatten 5 gehalten, welches über Winkelelemente 18 das Reflektorelement 15 gegen die Lichtleiterplatten 5 verspannt und dessen Enden in den beiden Stirnteilen 1a und 1b festgemacht sind.

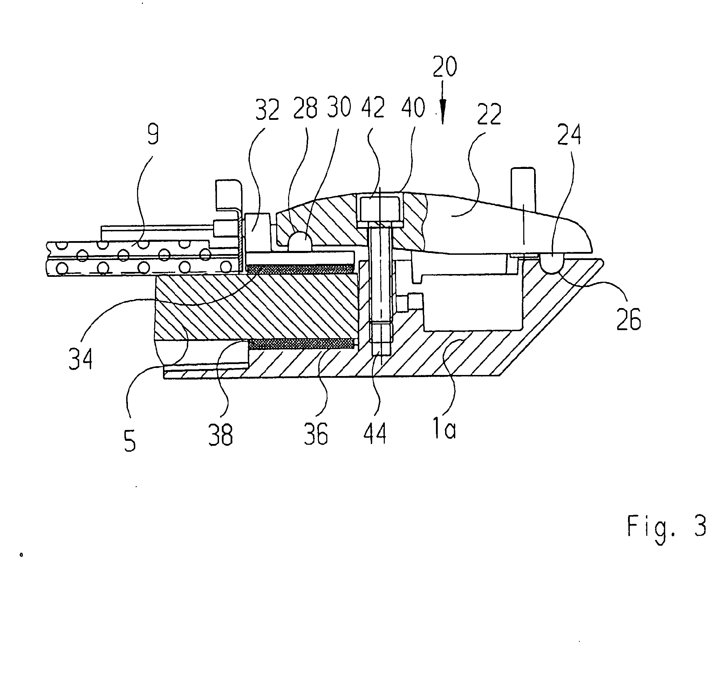

Wie im einzelnen aus Fig. 3 zu sehen ist, ist die Lichtleiterplatte 5 gegen das Stirnteil 1a durch eine Klemmeinrichtung 20 verspannt. Diese Klemmeinrichtung 20 weist ein Hebelelement 22 auf, welches an einem Ende einen Zapfen 24 besitzt, der in eine komplementäre Aussparung 26 des Stirnteils 1a eingreift, so daß der Zapfen um eine Achse senkrecht zu der Zeichenebene schwenkbar gelagert ist. Das Hebelelement 22 weist weiterhin an seinem vorderen, dem anderen Stirnteil 1b zugewandten Ende eine Aussparung 28 auf, in welche ein Zapfen 30 eines Befestigungselements 32 eingreift, so daß das Hebelelement 22 auch an seinem vorderen Ende, ebenfalls um eine Achse senkrecht zur Zeichenebene, drehbar gelagert ist. Das Befestigungselement 32 weist eine ebene Unterseite auf, welche auf einem Gummipolster 34 aufliegt, das seinerseits wiederum auf der Oberseite der Lichtleiterplatte 5 aufliegt. Auf der gegenüberliegenden Seite ist zwischen der Unterseite der Lichtleiterplatte 5 und der Auflagefläche 36 des Stirnteils 1a ebenfalls ein Gummipolster 38 zwischengeschaltet. Das Befestigungselement 32 weist weiterhin einen Drehzapfen auf, an welchem der Deckel 9 zusammen mit der Lampenfassung 8 der Leuchtstofflampe 3 schwenkbar gelagert ist.

Das Hebelelement 22 besitzt eine durchgängige Bohrung 40, die sich in ihrem oberen Bereich zu einem Schraubenkopfsitz verbreitert. Durch diese Bohrung 40 ist eine Schraube 42 geführt, welche mit ihrem Gewinde in ein komplementäres Gewinde einer Bohrung 44 in dem Stirnteil 1a eingreift. Durch Anziehen der Schraube 42 wird das Hebelelement über den Zapfen 28 und das Befestigungselement 32 gegen die Lichtleiterplatte 5 gedrückt, die dadurch gegen die Auflagefläche 36 des Stirnteils 1a verspannt und dadurch sicher gehalten wird. Die ebene Unterseite des Befestigungselements 32 sowie die drehbare Lagerung über den Zapfen 24 und die Ausnehmung 26 und den Zapfen 30 und die Ausnehmung 28 gewährleisten, daß die Unterseite des Befestigungselementes 32 nicht gegen die Lichtleiterplatte 5 verkantet und somit immer flächig über das Gummipolster 34 auf der Lichtleiterplatte 5 aufliegt. Auf diese Weise werden lokale Belastungen vermieden und ein flächiger Anpreßdruck erzeugt, zu dem auch die beiden Gummipolster 34 und 38 beitragen.

Verschiedene Abwandlungen der Erfindung sind möglich, insbesonder hinsichtlich der Ausbildung der Klemmelemente.

Die in der vorangehenden Beschreibung, den Ansprüchen und den Zeichnungen offenbarten Merkmale der Erfindung können sowohl einzeln als auch in beliebiger Kombination für die Verwirklichung der Erfindung in ihren verschiedenen Ausführungsformen wesentlich sein.

### Bezugszeichenliste

- 1: Trägerteil
- 1a, 1b: Stirnteil
- 3: Leuchstofflampe
- 5: Lichtleiterplatte
- 7: Reflektor
- 8: Fassung
- 9: Deckel
- 11: Reflektorwand
- 13: Reflektorwand
- 15: Reflektorelement
- 17: Seil
- 18: Winkelelement
- 20: Klemmeinrichtung
- 22: Hebelelement
- 24: Zapfen
- 26: Aussparung
- 28: Aussparung
- 30: Zapfen
- 32: Befestigungselement
- 34: Gummipolster
- 36: Auflagefläche des Stirnteils
- 38: Gummipolster
- 40: Bohrung in dem Hebelelement
- 42: Schraube
- 44: Bohrung in dem Stirnteil

## Patentansprüche

1. Innenraumleuchte mit einer Lichtquelle (3), einer Lichtleiterplatte (5), welche mit einer Schmalseite parallel zu der Längsachse der Lichtquelle (3) angeordnet ist, sowie einem Reflektor (7), welcher Licht von der Lichtquelle (3) zumindest teilweise zu der Schmalseite der Lichtleiterplatte (5) reflektiert, so daß es in die Lichtleiterplatte (5) eintritt, **gekennzeichnet durch** ein Trägerteil (1) mit einem Halteabschnitt (1a, 1b), an welchem die Lichtleiterplatte (5) abgestützt ist, sowie **durch** eine Klemmeinrichtung (20) an dem Halteabschnitt (1a, 1b) zum Einspannen der Lichtleiterplatte (5), wobei die Klemmeinrichtung (20) die Lichtleiterplatte (5) an dem Trägerteil (1) hält und die Klemmeinrichtung (20) die Lichtleiterplatte (5) gegen den Halteabschnitt (1a, 1b) verspannt.

2. Innenraumleuchte nach Anspruch 1, **dadurch gekennzeichnet, daß** die Lichtleiterplatte (5) freitragend von dem Trägerteil (1) absteht.

3. Innenraumleuchte nach Anspruch 1 oder 2, **dadurch gekennzeichnet, daß** die Klemmeinrichtung (20) ein an zwei Punkten (24, 30) drehbar gelagertes Hebelteil (22) und eine Einrichtung (42) zum Verspannen des Hebelteils gegen das Trägerteil (1) aufweist.

4. Innenraumleuchte nach Anspruch 3, **dadurch gekennzeichnet, daß** das Hebelteil (22) an einem Ende drehbar an einem Befestigungsteil (32) gelagert ist, welches auf der Lichtleiterplatte (5) aufliegt und durch Betätigen der Spanneinrichtung (42) gegen die Lichtleiterplatte (5) und zusammen mit dieser gegen den Halteabschnitt (1a, 1b) verspannt werden kann.

5. Innenraumleuchte nach Anspruch 3 oder 4, **dadurch gekennzeichnet, daß** die Spanneinrichtung eine zwischen dem Hebelteil (22) und dem Halteabschnitt (1a, 1b) wirkende Schraube aufweist, welche in dem Halteabschnitt (1a, 1b) oder dem Hebelteil (22) verankert ist und mit ihrem Kopf auf einem Schraubenkopfsitz des jeweils anderen Teils (22, 1a, 1b) einwirkt.

6. Innenraumleuchte nach einem der Ansprüche 1 bis 5, **dadurch gekennzeichnet, daß** sich der Reflektor (7) im wesentlichen über die gesamte Länge der Lichtquelle (3) parallel zu der Längsrichtung erstreckt, wobei die Lichtquelle (3) sich zwischen der Lichtleiterplatte (5) und dem Reflektor (7) befindet und wobei der Reflektor einen Wandabschnitt (11) aufweist, welcher Licht von der Lichtquelle über eine Kante der Schmalseite der Lichtleiterplatte (5) hinaus reflektiert.

7. Innenraumleuchte nach einem der Ansprüche 1 bis 6, **dadurch gekennzeichnet, daß** die Lichtleiterplatte (5) an einer ihrer Hauptflächen, welche eine Lichtaustrittsfläche bildet, zumindest abschnittsweise mit einer aus Mikroprismen bestehenden Prismenstruktur versehen ist, welche bewirkt, daß die Lichtabstrahlung einen vorgegebenen Ausblendwinkel nicht überschreitet.

8. Innenraumleuchte nach einem der Ansprüche 1 bis 7, **dadurch gekennzeichnet, daß** die Lichtleiterplatte (5) an zwei Stirnteilen (1a, 1b) des Trägerteils (1) als Halteabschnitten über jeweilige Klemmeinrichtungen (20) eingespannt ist.

9. Innenraumleuchte nach einem der Ansprüche 2 bis 8, **dadurch gekennzeichnet, daß** zumindest zwei Lichtleiterplatten (5) auf beiden Seiten des Trägerteils (1) angeordnet sind und jeweils von dem Trägerteil (1) freitragend abstehen.

## Claims

1. Interior luminaire having a light source (3), a light conductor plate (5) which is arranged with a narrow side parallel to the longitudinal axis of the light source (3), and a reflector (7) which reflects light from the light source (3) at least partially to the narrow side of the light conductor plate (5) such that it enters the light conductor plate (5), **characterized by** a carrier part (1) having a holding section (1a, 1b) on which the light conductor plate (5) is supported, and by a clamping device (20) on the holding section (1a, 1b) for clamping the light conductor plate (5), the clamping device (20) holding the light conductor plate (5) at the carrier part (1), and the clamping device (20) bracing the light conductor plate (5) against the holding section (1a, 1b).

2. Interior luminaire according to Claim 1, **characterized in that** the light conductor plate (5) projects from the carrier part (1) in a self-supporting fashion.

3. Interior luminaire according to Claim 1 or 2, **characterized in that** the clamping device (20) has a lever part (22), supported rotatably by two points (24, 30), and a device (42) for bracing the lever part against the carrier part (1).

4. Interior luminaire according to Claim 3, **characterized in that** the lever part (22) is supported at one end rotatably on a fastening part (32) which rests on the light conductor plate (5) and, by actuating the bracing device (42), can be braced against the light conductor plate (5) and, together with the latter, against the holding section (1a, 1b).

5. Interior luminaire according to Claim 3 or 4, **characterized in that** the bracing device has a screw which acts between the lever part (22) and the holding section (1a, 1b), is anchored in the holding section (1a, 1b) or the lever part (22), and acts with its head on a screw head seat of the respective other part (22, 1a, 1b).

6. Interior luminaire according to one of Claims 1 to 5, **characterized in that** the reflector (7) extends substantially over the entire length of the light source (3) parallel to the longitudinal direction, the light source (3) being located between the light conductor plate (5) and the reflector (7), and the reflector having a wall section (11) which reflects light from the light source beyond an edge of the narrow side of the light conductor plate (5).

7. Interior luminaire according to one of Claims 1 to 6, **characterized in that** the light conductor plate (5) is provided at one of its main surfaces which forms a light exit surface, at least in sections with a prismatic structure which consists of microprisms and has the effect that the light emission does not exceed a prescribed masking angle.

8. Interior luminaire according to one of Claims 1 to 7, **characterized in that** the light conductor plate (5) at two end parts (1a, 1b) of the carrier part (1) is clamped as holding sections via respective clamping devices (20).

9. Interior luminaire according to one of Claims 2 to 8, **characterized in that** at least two light conductor plates (5) are arranged on both sides of the carrier part (1) and respectively project from the carrier part (1) in a self-supporting fashion.

## Revendications

1. Lampe d'intérieur, avec une source lumineuse (3), une plaque à guide d'ondes optiques (5) qui par un côté étroit est disposée à la parallèle de l'axe longitudinal de la source lumineuse (3), ainsi qu'avec un réflecteur (7) qui réfléchit de la lumière de la source lumineuse (3) au moins partiellement vers le côté étroit de la plaque à guide d'ondes optiques (5), pour qu'elle pénètre dans la plaque à guide d'ondes optiques (5), **caractérisée par** un élément support (1) avec une section de maintien (1a, 1b) sur laquelle la plaque à guide d'ondes optiques (5) s'appuie, ainsi que par un dispositif de serrage (20) sur la section de maintien (1a, 1b) pour serrer la plaque à guide d'ondes optiques (5), le dispositif de serrage (20) maintenant la plaque à guide d'ondes optiques (5) sur l'élément support (1) et le dispositif de serrage (20) contraignant la plaque à guide d'ondes optiques (5) contre la section de maintien (1a, 1b).

2. Lampe d'intérieur selon la revendication 1, **caractérisée en ce que** la plaque à guide d'ondes optiques (5) dépasse en saillie l'élément support (1).

3. Lampe d'intérieur selon la revendication 1 ou 2, **caractérisée en ce que** le dispositif de serrage (20) comporte un élément à levier (22) logé en rotation sur deux points (24, 30) et un dispositif (42) pour contraindre l'élément à levier contre l'élément support (1).

4. Lampe d'intérieur selon la revendication 3, **caractérisée en ce que**, sur une extrémité, l'élément à levier (22) est logé de façon rotative sur un élément de fixation (32) qui s'appuie sur la plaque à guide d'ondes optiques (5) et qui par actionnement du dispositif de serrage (42) peut être contraint contre la plaque à guide d'ondes optiques (5) et en association avec cette dernière, contre la section de maintien (1a, 1b).

5. Lampe d'intérieur selon la revendication 3 ou 4, **caractérisée en ce que** le dispositif de serrage comporte une vis agissant entre l'élément à levier (22) et la section de maintien (1a, 1b), qui est ancrée dans la section de maintien (1a, 1b) ou dans l'élément à levier (22) et qui par sa tête agit sur un logement pour tête de vis de respectivement l'autre élément (22, 1a, 1b).

6. Lampe d'intérieur selon l'une quelconque des revendications 1 à 5, **caractérisée en ce que** le réflecteur (7) s'étend sensiblement sur toute la longueur de la source lumineuse (3), à la parallèle de la direction longitudinale, la source lumineuse (3) se trouvant entre la plaque à guide d'ondes optiques (5) et le réflecteur (7) et le réflecteur comportant une section de paroi (11) réfléchissant de la lumière de la source lumineuse par-dessus un bord du côté étroit de la plaque à guide d'ondes optiques (5) vers l'extérieur.

7. Lampe d'intérieur selon l'une quelconque des revendications 1 à 6, **caractérisée en ce que** sur l'une de ses surfaces principales qui constitue une surface de dégagement de lumière, la plaque à guide d'ondes optiques (5) est munie au moins par section d'une structure à prismes, constituée de microprismes, qui a pour effet que le rayonnement lumineux ne dépasse pas un certain angle d'éblouissement.

8. Lampe d'intérieur selon l'une quelconque des revendications 1 à 7, **caractérisée en ce que** sur deux parties frontales (1a, 1b) de l'élément support (1) en tant que sections de maintien, la plaque à guide d'ondes optiques (5) est serrée par l'intermédiaire des dispositifs de serrage (20) respectifs.

9. Lampe d'intérieur selon l'une quelconque des revendications 2 à 8, **caractérisée en ce qu'**au moins deux plaques à guide d'ondes optiques (5) sont disposées sur les deux côtés de l'élément support (1) et dépassent respectivement en saillie l'élément support (1).
